**Europäisches Patentamt**

**European Patent Office**

**Office européen des brevets**

(19)

(11) Veröffentlichungsnummer: **0 202 416**
**B1**

(12) **EUROPÄISCHE PATENTSCHRIFT**

(45) Veröffentlichungstag der Patentschrift:
10.08.88

(51) Int. Cl.⁴: **B 23 P 15/16**

(21) Anmeldenummer: **86103637.4**

(22) Anmeldetag: **18.03.86**

(54) Verfahren zum Herstellen von Spinndüsenplatten.

(30) Priorität: **17.05.85 DE 3517730**

(43) Veröffentlichungstag der Anmeldung:
**26.11.86 Patentblatt 86/48**

(45) Bekanntmachung des Hinweises auf die Patenterteilung:
**10.08.88 Patentblatt 88/32**

(84) Benannte Vertragsstaaten:
**AT CH FR GB IT LI NL SE**

(56) Entgegenhaltungen:
**DE-A-1 627 732**
**DE-A-3 118 335**
**FR-A-1 288 846**
**GB-A-1 176 889**
**GB-A-1 422 300**

(73) Patentinhaber: **Kernforschungszentrum Karlsruhe GmbH, Weberstrasse 5 Postfach 3640, D-7500 Karlsruhe 1 (DE)**

(72) Erfinder: **Becker, Erwin, Prof. Dr., Strählerweg 18, D-7500 Karlsruhe 41 (DE)**
Erfinder: **Ehrfeld, Wolfgang, Dr., Reutstrasse 27, D-7500 Karlsruhe 41 (DE)**
Erfinder: **Hagmann, Peter, Dr., Nagoldstrasse 9c, D-7514 Leopoldshafen (DE)**

EP 0 202 416 B1

## Beschreibung

Die Erfindung betrifft ein Verfahren zum Herstellen von Spinndüsenplatten nach dem Oberbegriff von Anspruch 1.

Bei der großtechnischen Herstellung von Fasern aus organischem oder anorganischem Material wird der Ausgangsstoff in fließfähigem Zustand durch Spinndüsenplatten gepreßt, die zahlreiche Spinndüsenkanäle enthalten. Die Spinndüsenkanäle bestehen in den meisten Fällen aus einer Düsenkapillare, durch die das zu verspinnende Material austritt und einem wesentlich weiteren Vorkanal, dem das zu verspinnende Material zugeführt wird. Die im allgemeinen zylindrischen bzw. trichterförmigen Vorkanäle können relativ leicht durch Bohren oder Stechen eingebracht werden, während das Einbringen der in vielen Fällen profilierten, z. B. mit sternförmigem Querschnitt versehenen Düsenkapillaren aufwendigere Techniken, z. B. Drahterodieren oder erosives Senken erfordert.

Spinndüsenplatten sind Verschleißteile. Insbesondere Spinndüsenplatten mit profilierten Düsenkapillaren stellen bei der bisherigen Herstellungsweise einen nicht zu unterschätzenden Kostenfaktor für nie zu erzeugende Faserprodukte dar. Außerdem liegt bei der bisherigen Herstellungweise für profilierte Düsenkapillaren die mit tragbaren Aufwand erreichbare untere Grenze der kritischen Abmessungen im allgemeinen bei etwa 30 µm. Dadurch ergeben sich Einschränkungen bei der Konstruktion des Filaments.

Supermatte Polyester-Filamente in: . Chemiefasern/Textilindustrie, 29/81 (1979), S. 697 - 704). Dadurch ergeben sich Einschränkungen bei der Konstruktion des Filaments.

Ausgehend von diesem Stand der Technik hat die vorliegende Erfindung die Aufgabe, ein Verfahren für die Herstellung von Spinndüsenplatten insbesondere mit profilierten Düsenkapillaren zu schaffen, bei dem sich die kritischen Abmessungen der Düsenkapillaren mit tragbarem Aufwand auf Werte unter die mit den vorbekannten Verfahren erreichbare Grenze absenken lassen.

Zur Lösung dieser Aufgabe wird ein Verfahren gemäß Anspruch 1 vorgeschlagen. Die Ansprüche 2 bis 4 betreffen bevorzugte Ausführungsformen des Verfahrens der Erfindung.

Das Verfahren wird im folgenden anhand der Figuren 1 bis 11 beispielhaft erläutert, wobei sich die Figuren 1 bis 4 auf Anspruch 1, die Figuren 5 und 6 auf Anspruch 2, die Figuren 7 und 8 auf Anspruch 3 und die Figuren 9 bis 11 auf Anspruch 4 beziehen.

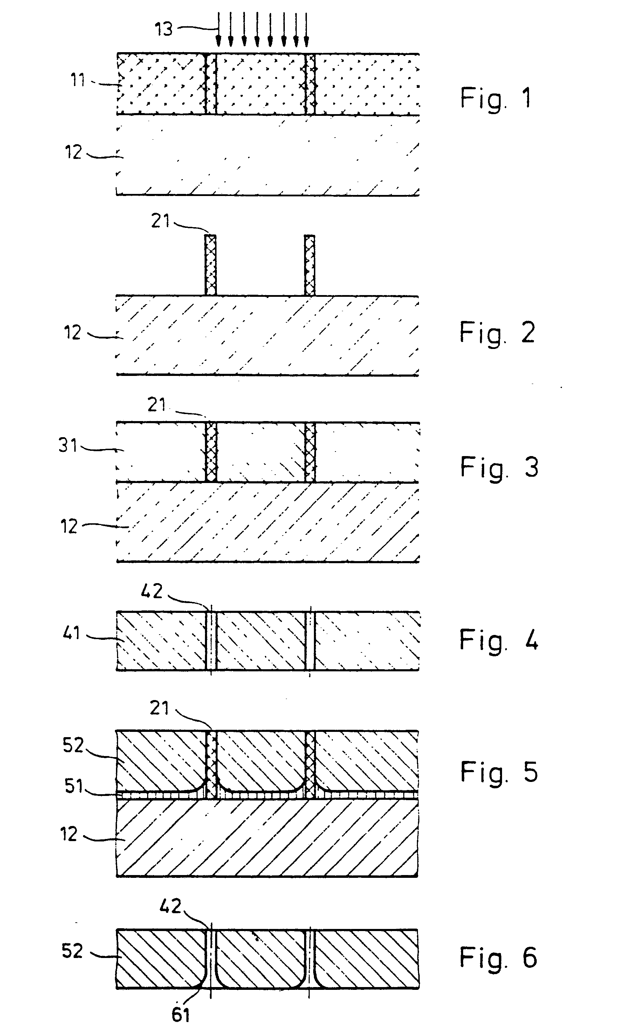

In Fig. 1 bedeutet 12 eine plattenförmige Galvanikelektrode, mit der eine Schicht 11 aus durch energiereiche Strahlung in seinen Eigenschaften veränderbarem Material (Resistmaterial) verbunden ist. Durch partielles Bestrahlen mit energiereicher Strahlung 13 und partielles Entfernen des Resistmaterials unter Ausnutzung der durch die Strahlung erzeugten unterschiedlichen Materialeigenschaften werden Negativformen 21 (Fig. 2) der Düsenkapillaren erzeugt, die mit der Galvanikelektrode 12 verbunden sind. In einem Galvanikbad wird auf der Galvanikelektrode 12 eine Galvanikschicht 31 erzeugt (Fig. 3), die die Negativformen 21 der Düsenkapillaren bündig einschließt. Nach Einebnen der Galvanikschicht 31, Entfernen der Negativformen 21 und der Galvanikelektrode 12 verbleibt eine Spinndüsenplatte 41 mit Düsenkapillaren 42 (Fig. 4).

Die Galvanikelektrode 12 läßt sich durch Auflösen entfernen, wenn für ihre Herstellung ein Material verwendet wird, das sich in einem Lösungsmittel auflöst, welches die Galvanikschicht 31 nicht angreift. Das Entfernen der Galvanikelektrode 12 gelingt auch ohne ihre Zerstörung durch vorsichtiges Abziehen der Galvanikschicht 31 von der Galvanikelektrode 12, wenn die Haftfestigkeit der Galvanikschicht 31 in bekannter Weise durch entsprechende Vorbehandlung, z. B. durch Passivierung der Galvanikelektrode 12, vermindert worden ist.

Bei einer bevorzugten Ausführungsform entsprechend Anspruch 2 wird im Verfahrensschritt c) zunächst eine relativ dünne Galvanikschicht 51 (Fig. 5) aus einem leicht löslichen Material und anschließend eine wesentlich dickere Galvanikschicht 52 aus einem schwer löslichen Material abgeschieden. Die Entfernung der Galvanikelektrode 12 gelingt dann ohne ihre Zerstörung und ohne Gefährdung der als Spinndüsenplatte vorgesehenen Galvanikschichts 52 durch Auflösen der leicht löslichen Galvanikschicht 51. Ein weiterer Vorteil dieser bevorzugten Ausführungsform beruht auf der Tatsache, daß die dünne Galvanikschicht 51 in unmittelbarer Nachbarschaft der Negativformen 21 der Düsenkapillaren schneller als in den übrigen Bereichen wächst. Dadurch ergeben sich nach dem Auflösen der Galvanikschicht 51 einseitige Erweiterungen 61 (Fig. 6) der Düsenkapillaren 42, die als Einlauftrichter für das zu verspinnende Material geeignet sind.

Wenn größere Einlauftrichter oder mit den Düsenkapillaren verbundene Vorkanäle gewünscht werden, lassen sich diese selbstverständlich bei den in Fig. 4 dargestellten Spinndüsenplatten nachträglich, z. B. mechanisch oder elektroerosiv einbringen. Dabei kann es zweckmäßig sein, die Reihenfolge von Teilen der Verfahrensschritte c) und d) abzuändern, so daß beispielsweise während des mechanischen Einbringens von Vorkanälen die Düsenkapillaren 42 noch mit den Negativformen 21 gefüllt sind.

Wenn die Spinndüsenplatte im Betrieb größeren Druckkräften ausgesetzt werden soll, kann es zweckmäßig sein, die nach Anspruch 1 oder 2 hergestellte Spinndüsenplatte nachträglich fest mit einer Vorkanäle enthaltenden Platte zu verbinden, wobei die Vorkanäle bezüglich Form und Position so ausgeführt werden, daß sie an die Düsenkapillaren anschließen. Die feste Verbindung kann z.B. durch Löten oder Diffusionsschweißen erreicht werden.

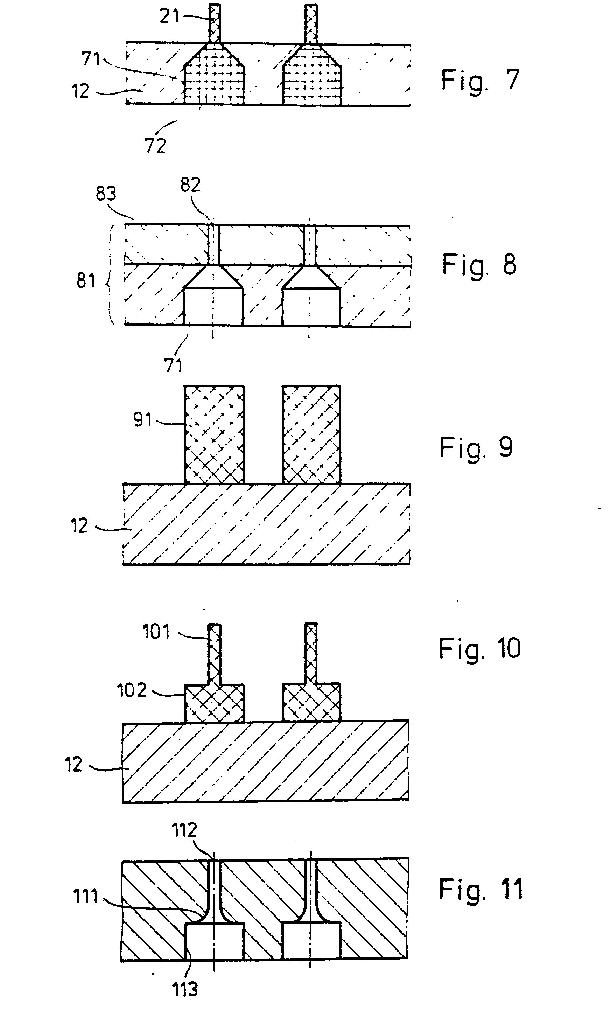

Eine feste Verbindung zwischen einer Düsenkapillaren enthaltenden Galvanikschicht und einer Vorkanäle enthaltenden Metallplatte läßt sich auf besonders einfache und wirtschaftliche Weise dadurch erzielen, daß die Galvanikelektrode 12 an den für die Düsenkapillaren vorgesehenen Positionen Vorkanäle 71 enthält, die mit einem leicht entfernbaren Füllmaterial 72 bündig verschlossen sind, und daß im Verfahrensschritt d) lediglich das Füllmaterial 72 der Galvanikelektrode 12 entfernt wird. Dazu wird gemäß Fig. 7 eine Metallplatte als Galvanikelektrode 12 verwendet, die an den für die Düsenkapillaren vorgesehenen Positionen Vorkanäle 71 enthält, die mit einem leicht entfernbaren Füllmaterial 72 bündig verschlossen sind. Nach Durchführung der Verfahrensschritte a bis c und Entfernen des Füllmaterials 72 liegt eine Spinndüsenplatte 81 (Fig. 8) mit Düsenkapillaren 82 in einer Galvanikschicht 83 und Vorkanälen 71 vor.

Als Füllmaterial 72 kann sowohl ein elektrisch leitender als auch ein elektrisch isolierender Stoff verwendet werden. Mit elektrisch leitendem Füllmaterial ergibt sich ein relativ scharfkantiger Übergang zwischen den Düsenkapillaren 82 und den Vorkanälen 71. Mit elektrisch isolierendem Füllmiaterial wird ein kontinuierl icherer Übergang erzielt, wobei dieser für die praktische Anwendung im allgemeinen günstige Effekt noch dadurch verstärkt werden kann, daß der kleinste Durchmesser der Vorkanäle deutlich größer als der durchmesser der Düsenkapillaren gewählt wird.

Spinndüsenplatten, bei denen die Düsenkapillaren mit Vorkanälen verbunden sind, lassen sich in besonders hoher Qualität nach Anspruch 4 herstellen. Gemäß Fig. 9 werden dabei durch partielles Bestrahlen und partielles Entfernen von Resistmaterial zunächst mit der Galvanikelektrode 12 verbundene Resistzylinder 91 erzeugt, deren Durchmesser dem gewünschten Durchmesser der Vorkanäle entspricht. Durch weiteres partielles Bestrahlen mit verminderter Eindringtiefe und partielles Entfernen von Resistmaterial werden aus diesen Zylindern Negativformen 101 (Fig. 10) der Düsenkapillaren herausgearbeitet, die mit der Galvanikelektrode 12 über Negativformen 102 der Vorkanäle verbunden sind. Es zeigt sich, daß beim Verfahrensschritt c nicht nur die Negativformen 102 der Vorkanäle, sondern auch die damit verbundenen wesentlich dünneren Negativformen 101 der Düsenkapillaren bündig von der Galvanikschicht eingeschlossen werden. Durch Anpassen der Streufähigkeit des Galvanikbades lassen sich dabei für die praktische Anwendung günstige kontinuierliche Übergänge 111 zwischen den Düsenkapillaren 112 und den Vorkanälen 113 erzielen (Fig. 11).

Als energiereiche Strahlung kommen sowohl Korpuskularstrahlen als auch elektromagnetische Wellen, insbesondere die von einem Elektronensynchrotron erzeugte Röntgenstrahlung (Synchrotronstrahlung), in Frage. Während man bei der Verwendung elektromagnetischer Wellen zur Erzeugung der gewünschten Strukturen in bekannter Weise mit Masken arbeitet, kann man bei Vervendung von Korpuskularstrahlen die Struktur auch durch elektromagnetische Steuerung erzeugen.

Bei dem in den Fig. 1 - 4 dargestellten Verfahren nach Anspruch 1 wird eine Platte aus Edelstahl (Werkstoff Nr. 1.4301) als Galvanikelektrode 12 verwendet. Die Resistschicht 11 wird durch Aufgießen eines Gießharzes auf Methacrylat-Basis (Plexit 74, Röhm GmbH, Darmstadt) mit anschließender Härtung hergestellt. Zur Erhöhung der Haftfestigkeit der Resistschicht 11 aus PMMA wird die Oberfläche der Galvanikelektrode 12 vor dem Aufbringen des Gießharzes durch Sandstrahlen mit Korund mit einer mittleren Körnung von 10 μm aufgerauht. Die Entwicklung des bestrahlten Resistmaterials erfolgt in bekannter Weise mit einem flüssigen Entwickler. Die Galvanikschicht 31 wird durch Abscheiden von Nickel auf der Galvanikelektrode 12 in einem chloridfreien Nickelsulfamatbad hergestellt. Das sich anschließende Einebnen erfolgt durch Polierfräsen. Als Material für die genannte dünne Galvanikschicht 51 wird Kupfer verwendet, das in einer alkalischen Ätze selektiv aufgelöst wird.

Zum Ausfüllen der Vorkanäle 71 wird ein nicht vernetzendes Gießharz auf Methacrylatbasis (Plexit M60, Röhm GmbH, Darmstadt) eingesetzt, das nach Durchführung der Verfahrensschritte a bis c in Dichlormethan aufgelöst wird.

Bei der Bestrahlung mit Synchrotronstrahlung mit einer charakteristischen Wellenlänge von $\lambda_c$ = 0,2 nm wird eine Röntgenmaske verwendet, die aus einem für Röntgenstrahlung weitgehend durchlässigen Maskenträger aus ca. 20 μm Beryllium und einem für Röntgenstrahlung weitgehend undurchlässigen Absorber aus ca. 15 μm starkem Gold besteht.

**Patentansprüche**

1. Verfahren zum Herstellen von Spinndüsenplatten mit Düsenkapillaren gekennzeichnet durch folgende Verfahrenschritte:
a) Verbinden einer Schicht (11) aus durch energiereiche Strahlung in seinen Eigenschaften veränderbarem Material (Resistmaterial) mit einer Galvaikelektrode (12).
b) Erzeugen von mit der Galvankelektrode (12) verbundenen Negativformen (21) der Düsenkapillaren durch partielles Bestrahlen und partielles Entfernen des Resistmaterials unter Ausnutzung der durch die Bestrahlung erzeugten unterschiedlichen Materialeigenschaften.

c) Erzeugen einer die Negativformen (21) der Düsenkapillaren einschließenden Galvanikschicht (31) auf der Galvanikelektroden (12), Einebnen der Galvanikschicht (31) und Entfernen der Negativformen (21).

d) vollstädiges oder teiweises Entfernen der Galvanikelektroden (12).

2. Verfahren nach Anspruch 1, dadurch gekennzeichnet, daß im Verfahrensschritt c) zunächst eine relativ dünne Galvanikschicht (51) aus eienem leicht löslichen Material und anschließend eine wesentlich dickere Galvanikschicht (52) aus enem schwer löslichen Material abgeschieden wird, und die Entfernung der Galvanikelektrode (12) durch Auflösen der leicht löslichen Schicht (51) erfolgt.

3. Verfahren nach Anspruch 1, dadurch gekennzeichnet, daß die Galvanikelektrode (12) an den für die Düsenkapillaren vorgesehenen Positionen Vorkanäle (71) enthält, die mit einem leicht entfernbaren Füllmaterial (72) bündig verschlossen sind, und daß im Verfahrensschritt lediglich das Füllmaterial (72) der Galvanikelektrod (12) wird.

4. Verfahren nach einem der Ansprüche 1 bis 3, dadurch gekennzeichnet, daß im Verfahrensschritt b), durch wiederholtes partielles Bestrahlen und wiederholtes partielles Entfernen des Resistmaterials Negativformen (101) von Düsenkapillaren erzeugt werden, die mit der Galvanikelektrode (12) über Negativformen (102) von Vorkanälen verbunden sind.

**Claims**

1. Method of making spinneret plates with nozzle capillary tubes, characterised by the following method steps:

a) joining a layer (11) of material (resist material), the properties of which are changeable as a result of energy-rich radiation, to a galvanic electrode (12);

b) producing negative forms (21) of the nozzle capillary tubes, which forms are joined to the galvanic electrode (12), by partial irradiation and partial removal of the resist material utilising the different material properties produced by the irradiation;

c) producing a galvanic layer (31), which incorporates the negative forms (21) of the nozzle capillary tubes, on the galvanic electrode (12), levelling the galvanic layer (31) and removing the negative forms (21);

d) wholly or partially removing the galvanic electrode (12).

2. Method according to claim 1, characterised in that, in method step c), a relatively thin galvanic layer (51) formed from a material of high solubility is initially deposited, and a substantially thicker galvanic layer (52) formed from a material of low solubility is subsequently deposited, and the removal of the galvanic electrode (12) is effected by dissolving the layer of high solubility (51).

3. Method according to claim 1, characterised in that, at the positions provided for the nozzle capillary tubes, the galvanic electrode (12) includes basic channels (71) which are completely filled with an easily removable filler material (72), and in that, in method step d), only the filler material (72) of the galvanic electrode (12) is removed.

4. Method according to any of claims 1 to 3, characterised in that, in method step b), by repeated, partial irradiation and repeated partial removal of the resist material, negative forms (101) of nozzle capillary tubes are produced, which are joined to the galvanic electrode (12) by negative forms (102) of basic channels.

**Revendications**

1. Procédé pour fabriquer des plaques à filières avec des capillaires de filières, procédé caractérisé en ce qu'il comporte les étapes suivantes:

a) association à une électrode galvanique (12) d'une couche (11) constituée d'un matériau dont les propriétés sont susceptibles d'être modifiées par un rayonnement de haute énergie (matériau de protection),

b) réalisation de formes négatives (21), liées à l'électrode galvanique, de capillaires de filières, par irradiation partielle et enlèvement partiel du matériau de protection, en utilisant diverses propriétés du matériau obtenues par l'irradiation,

c) réalisation sur l'électrode galvanique (12) d'une couche galvanique (31) incluant les formes négatives (21) des capillaires de filières, égalisation de la couche galvanique (31) et enlèvement des formes négatives (21),

d) enlèvement complet ou partiel de l'électrode galvanique (12).

2. Procédé selon la revendication 1, caractérisé en ce que, dans l'étape c) du procédé, on dépose tout d'abord une couche galvanique relativement mince (51) en un matériau facilement soluble et ensuite une couche galvanique notablement plus épaisse (52) en un matériau difficilement soluble, l'enlèvement de l'électrode galvanique (12) s'effectuant par dissolution de la couche (51) facilement soluble.

3. Procédé selon la revendication 1, caractérisé en ce que l'électrode galvanique (12) comprend, aux emplacements prévus pour les capillaires de filières, des pré-canaux (71), qui sont complètement fermés par un matériau de remplissage (72) facile à enlever, et que, dans l'étape d) du procédé seul le matériau de remplissage (72) est enlevé de l'électrode galvanique (12).

4. Procédé selon une des revendications 1 à 3, caractérisé en ce que, dans l'étape b) du procédé, des formes négatives (101) de capillaires de filières sont obtenues par irradiation partielle répétée et enlèvement partiel répété du matériau de protection, ces formes négatives de capillaires étant reliées à l'électrode galvanique (12) par l'intermédiaire de formes négatives (102) de pré-canaux.

**0 202 416**

13

11

12

**Fig. 1**

21

12

**Fig. 2**

21

31

12

**Fig. 3**

42

41

**Fig. 4**

21

52

51

12

**Fig. 5**

42

52

61

**Fig. 6**

1

Fig. 7

Fig. 8

Fig. 9

Fig. 10

Fig. 11